# EUROPÄISCHE PATENTSCHRIFT

(11) **EP 0 884 220 B1**
(45) Veröffentlichungstag und Bekanntmachung des Hinweises auf die Patenterteilung: **20.08.2003**
(21) Anmeldenummer: 98107907.2
(22) Anmeldetag: 30.04.1998
(51) Int. Cl.: B60R 16/02

(54) **Vorrichtung zur Anzeige und Steuerung von Funktionen in einem Kraftfahrzeug**
Function display and control device in a vehicle
Dispositif d'affichage et de commande de fonctions dans un véhicule

(30) Priorität: 14.06.1997 DE 19725235
(43) Veröffentlichungstag der Anmeldung: 16.12.1998
(73) Patentinhaber: Volkswagen Aktiengesellschaft, 38436 Wolfsburg (DE)
(72) Erfinder: Oberschachtsiek, André, Dipl.-Ing., 38518 Gifhorn (DE); Dirksen, Susanne, 38446 Wolfsburg (DE); Schlepper, Bernd, 38448 Wolfsburg (DE)

(56) Entgegenhaltungen:
- EP-A- 0 511 010
- US-A- 4 584 603
- US-A- 5 290 088

## Beschreibung

Die Erfindung betrifft eine Vorrichtung zur Anzeige und Steuerung von Funktionen in einem Kraftfahrzeug.

Allgemein gibt es große Anstrengungen das Reisen in den verschiedenen Verkehrsmitteln sehr abwechslungsreich und komfortabel zu gestalten. Dazu gehört, daß dem Reisenden ein gewisses Informationsangebot zur Verfügung gestellt wird.

So ist aus der Eisenbahntechnik ein interaktives digitales Informations- und Unterhaltungssystem bekannt, bei dem mehrere Terminals mit je einem Bildschirm und einer Eingabeeinrichtung an einem Zentralrechner angeschlossen sind. Der Zentralrechner ist dabei über ein digitales Bussystem zur Datenübermittlung mit allen Wagen verbunden. Insbesondere befindet sich in jedem Wagen ein Display mit einer Eingabe, an dem ein Fahrgast Informationen über den Fahrbetrieb, wie z.B. mögliche Anschlußzüge am Zielbahnhof, abfragen kann. Weiter stehen dem Fahrgast an den Fahrsitzen Kopfhörer zur Verfügung, über die Durchsagen des Zugpersonals undloder Radiosendungen empfangen werden können. Der Zentralrechner sorgt je nach Fahrstrecke für eine optimale Abstimmung auf die zu empfangenen Sender beim Radioprogramm. Für einen Teil der Fahrgäste sind ferner Videogeräte installiert. Die Bildschirme der Videogeräte sind dabei, wenn baulich möglich, in die Rückenlehne eines in Sitzrichtung vor dem Fahrsitz befindlichen Sitz, dem der Bildschirm zugeordnet ist, eingearbeitet und befinden sich so bezüglich Abstand und Höhe optimal im Sehbereich des Fahrgastes. Diese Videogeräte werden über ein eignes HF-Netz zum Übertragen von Videosendungen gespeist.

Aus der DE 296 08 032 ist ein solches System bekannt, bei dem zur Erhöhung des Fahrkomforts jeweils einem Fahrsitz ein Terminal des Informationssystems zugeordnet ist, wobei mindestens ein Bildschirm eines Terminals in die Rückenlehne des Fahrsitzes integriert ist, der sich in Sitzrichtung vor dem Fahrsitz, dem dieses Terminal zugeordnet ist, befindet. Nachteilig an diesem System ist, daß es dem Benutzer sehr wenig Einflußmöglichkeiten gibt und im wesentlichen auf HiFi- und Videowiedergabe beschränkt ist, was bereits aus Reisebussen und Flugzeugen bekannt ist. Solche Systeme sind aber für Personenkraftwagen aufgrund ihrer mangelnden Flexibilität nicht geeignet.

Der Erfindung liegt daher das technische Problem zugrunde, eine Vorrichtung zur Anzeige und Steuerung von Funktionen in einem Kraftfahrzeug zu schaffen, das einen erhöhten Komfort bietet.

Die Lösung des technischen Problems ergibt sich durch die Merkmale des Patentanspruches 1.

Durch die Ausbildung mit einem Master-Bedienfeld, bestehend aus einem Display und mindestens einer Bedieneinheit, und mindestens einem Slave-Bedienfeld, ebenfalls bestehend aus einem Display und einer Bedieneinheit, die miteinander bidirektional verbunden sind, wobei mittels des Master-Bedienfeldes alle vorhandenen Funktionen darstellbar und ansteuerbar sind und mittels des Master-Bedienfeldes dem Slave-Bedienfeld Funktionen programmierbar zuordenbar sind, die mittels des Slave-Bedienfeldes darstellbar und ansteuerbar sind, können abhängig von der Art der Fahrzeuginsassen, diesen gewisse Informations- und Steuerungsmöglichkeiten zugewiesen werden. Sind z.B. Kinder die Fahrzeuginsassen, so wird man diesen überwiegend nur Informationen zur Anzeige zur Verfügung stellen, jedoch eine Ansteuerung von Funktionsbaugruppen meist nicht wünschen. Bei Bedarf kann einem Insassen hingegen die Möglichkeit zur Ansteuerung von Funktionsbaugruppen wie z.B. Heizung, Klimaanlage oder dem Radio gewährt werden. Weitere vorteilhafte Ausgestaltungen der Erfindung ergeben sich aus den Unteransprüchen.

In einer weiteren bevorzugten Ausführungsform ist das Master-Bedienfeld dem Kraftfahrzeugführer zugeordnet. Vorzugsweise sind die Slave-Bedienfelder im Fond in oder an der Rückseite des Fahrer- und/oder Beifahrersitzes angeordnet. In einer weiteren bevorzugten Ausführungsform sind die Bedienfelder als Multifunktions-Bedieneinrichtungen ausgebildet, bei denen eine Auswahl individueller Funktionen innerhalb einer Funktionsgruppe mittels eines einzigen ersten Bedienelementes erfolgt. Dabei wird die Auswahl der der individuellen Funktionen übergeordneten Funktionsgruppen über diesen übergeordnete zweite Bedienelemente durchgeführt, wodurch eine Doppelbelegung eines oder mehrerer Bedienelemente für die Auswahl der übergeordneten Funktionen vermeidbar ist, so daß eine einfache Handhabung auch für eine große Anzahl komplexer Funktionsgruppen gewährleistet ist.

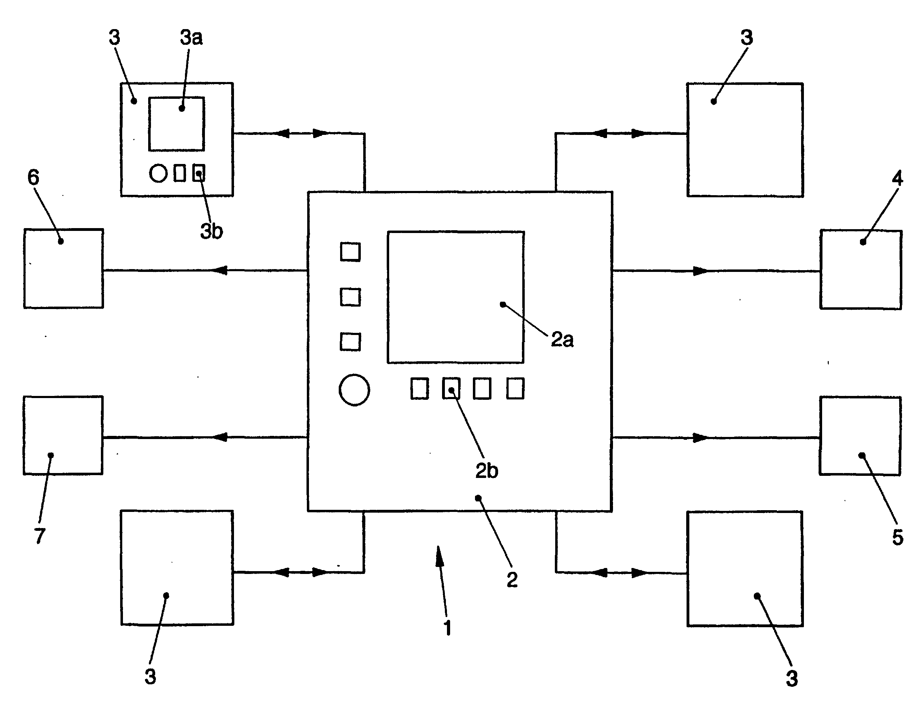

Die Erfindung wird nachfolgend anhand eines bevorzugten Ausführungsbeispieles näher erläutert. Die einzige Figur zeigt ein schematisches Blockschaltbild einer Vorrichtung zur Anzeige und Steuerung von Funktionen in einem Kraftfahrzeug.

Die Vorrichtung 1 zur Anzeige und Steuerung von Funktionen in einem Kraftfahrzeug umfaßt ein Master-Bedienfeld 2, bestehend aus einem Display und mindestens einer Bedieneinheit 2b, und mehrere Slave-Bedienfelder 3, bestehend aus einem Display 3a und mindestens einer Bedieneinheit 3b, wobei das Master-Bedienfeld 2 jeweils bidirektional mit einem Slave-Bedienfeld 3 verbunden ist. Des weiteren ist das Master-Bedienfeld 2 mit Funktionsbaugruppen verbunden, z.B. einer Heizung 4, einer Klimaanlage 5, einem Radio 6 und einem Navigationssystem 7, wobei Funktionsbaugruppen auch beliebig Slave-Bedienfeldern 3 zugeordnet sein können. Vorraussetzung ist jedoch, daß sowohl das Master-Bedienfeld 2 als auch gegebenenfalls alle anderen Slave-Bedienfelder 3 auf die jeweilige Funktionsbaugruppe zugreifen können.

Über das Master-Bedienfeld 2, das vorzugsweise dem Kraftfahrzeugführer zugeordnet ist, wird jedem einzelnen Slave-Bedienfeld 3 eine Bedienerlaubnis einer oder mehrerer der Funktionsbaugruppen zugeordnet, die dann von dem Slave-Bedienfeld 3 anzeigbar und/oder ansteuerbar sind.

Um den Verdrahtungsaufwand gering zu halten, findet die Kommunikation von einem Slave-Bedienfeld 3 mit einer Funktionsbaugruppe immer über das Master-Bedienfeld 2 statt. Dabei kann die Bedienerlaubnis einer Funktionsbaugruppe mehreren Slave-Bedienfeldern 3 gleichzeitig zugeordnet werden. In diesem Fall weist das Master-Bedienfeld 2 zusätzlich den einzelnen Slave-Bedienfeldern 3 Prioritäten zu. Dadurch kann das Master-Bedienfeld 2 bei unterschiedlichen Steuersignalen für eine Funktionsbaugruppe von verschiedenen Slave-Bedienfeldem 3 entscheiden, welches Signal an die Funktionsbaugruppe weitergeleitet wird. Somit kann der Kraftfahrzeugführer je nach Art seiner Beifahrer und Fahrzeuginsassen diesen gewisse Funktionsbaugruppen zuordnen, die diese dann sich anzeigen oder ansteuern können. Des weiteren besteht die Möglichkeit, daß die Bedienerlaubnis gewisser Funktionsbaugruppen standardmäßig den Slave-Bedienfeldern 3 zugeordnet sind. Weiter können bestimmte Zusammenstellungen von Funktionsbaugruppen in Gruppen zusammengefaßt sein, so daß die Zuordnung für ein Slave-Bedienfeld 3 vereinfacht ist.

## Patentansprüche

1. Vorrichtung (1) zur Anzeige und Steuerung von Funktionen in einem Kraftfahrzeug, umfassend mindestens ein Master-Bedienfeld (2) und mindestens ein Slave-Bedienfeld (3), die miteinander bidirektional verbunden, wobei mittels des Master-Bedienfeldes (2) alle vorhandenen Funktionen darstellbar und ansteuerbar sind und mittels des Master-Bedienfeldes (2) dem Slave-Bedienfeld (3) Funktionen programmierbar zuordenbar sind, die mittels des Slave-Bedienfeldes (3) darstellbar und ansteuerbar sind.

2. Vorrichtung nach Anspruch 1, **dadurch gekennzeichnet, daß** das Master-Bedienfeld (2) dem Kraftfahrzeugführer zugeordnet ist.

3. Vorrichtung nach Anspruch 1 oder 2, **dadurch gekennzeichnet, daß** die Slave-Bedienfelder (3) im Fond in oder an der Rückseite des Fahrer- und/oder Beifahrersitzes angeordnet sind.

4. Vorrichtung nach einem der vorangegangenen Ansprüche, **dadurch gekennzeichnet, daß** das Master-Bedienfeld (2) und/oder das Slave-Bedienfeld (3) als Multifunktion-Bedieneinrichtung ausgebildet sind.

5. Vorrichtung nach einem der vorangegangenen Ansprüche, **dadurch gekennzeichnet, daß** bestimmte Funktionen in Gruppen zusammengefaßt sind und als Gruppe einem Slave-Bedienfeld (3) zuordenbar sind.

## Claims

1. Device (1) for displaying and controlling functions in a motor vehicle, comprising at least one master operator control field (2) and at least one slave operator control field (3) which are connected to one another bidirectionally, it being possible to display and actuate all the existing functions by means of the master operator control field (2) and to assign to the slave operator control field (3), in a programmable fashion, functions which can be displayed and actuated by means of the slave operator control field (3).

2. Device according to Claim 1, **characterized in that** the master operator control field (2) is assigned to the driver of the motor vehicle.

3. Device according to Claim 1 or 2, **characterized in that** the slave operator control fields (3) are arranged in the back part of the vehicle in or on the rear side of the driver's and/or front seat passenger's seat.

4. Device according to one of the preceding claims, **characterized in that** the master operator control field (2) and/or the slave operator control field (3) are embodied as a multifunctional operator control device.

5. Device according to one of the preceding claims, **characterized in that** specific functions are combined in groups and can be assigned as a group to a slave operator control field (3).

## Revendications

1. Dispositif (1) d'affichage et de commande de fonctions dans un véhicule automobile, comprenant au moins un panneau de commande maître (2) et au moins un panneau de commande esclave (3) qui sont bidirectionnellement connectés entre eux, le panneau de commande maître (2) permettant de représenter et de commander toutes les fonctions existantes et le panneau de commande maître (2) permettant d'affecter de façon programmable au panneau de commande esclave (3) des fonctions qui peuvent être représentées et commandées au moyen du panneau de commande esclave (3).

2. Dispositif selon la revendication 1, **caractérisé en ce que** le panneau de commande maître (2) est affecté au conducteur du véhicule automobile.

3. Dispositif selon la revendication 1 ou 2, **caractérisé en ce que** les panneaux de commande esclaves (3) sont disposés dans l'habitacle arrière ou sur le côté arrière du siège de conducteur et/ou du siège de passager avant.

4. Dispositif selon l'une quelconque des revendications précédentes, **caractérisé en ce que** le panneau de commande maître (2) et/ou le panneau de commande esclave (3) sont conçus comme dispositifs de commande multifonctions.

5. Dispositif selon l'une quelconque des revendications précédentes, **caractérisé en ce que** des fonctions données sont réunies en groupes et peuvent être affectées en tant que groupe à un panneau de commande esclave (3).
